# EUROPEAN PATENT SPECIFICATION

(11) **EP 2 276 214 B1**
(45) Date of publication and mention of the grant of the patent: **22.06.2016**
(21) Application number: 08873907.3
(22) Date of filing: 26.12.2008
(51) Int. Cl.: H04L 29/06, H04L 12/70, H04L 12/801, H04L 12/807

(54) **METHOD FOR STATE MIGRATING OF STREAM CONTROL TRANSMISSION PROTOCOL**
VERFAHREN ZUR ZUSTANDSMIGRATION DES STREAM-CONTROL-ÜBERTRAGUNGSPROTOKOLLS
PROCÉDÉ DE CHANGEMENT D'ÉTAT D'UN PROTOCOLE DE TRANSMISSION À FLUX RÉGULÉ

(30) Priority: 17.04.2008 CN 200810090293
(43) Date of publication of application: 19.01.2011
(73) Proprietor: ZTE Corporation, Shenzhen, Guangdong 518057 (CN)
(72) Inventor: ZHANG, Kunzuo, Shenzhen Guangdong 518057 (CN); LIANG, Qingyong, Shenzhen Guangdong 518057 (CN); WANG, Ke, Shenzhen Guangdong 518057 (CN)
(74) Representative: Appleyard Lees IP LLP
(86) International application number: PCT/CN2008/073773
(87) International publication number: WO 2009/127112

(56) References cited:
- WO-A1-2006/069605
- CN-A- 1 533 100
- CN-A- 1 567 916
- CN-A- 101 262 437
- US-A1- 2003 202 480
- US-A1- 2006 164 974
- US-A1- 2007 160 073

## Description

### Technical Field

The present invention relates to the technical field of integration of a communication circuit switching network and an IP network, and in particular, to a method for state changing of stream control transmission protocol (SCTP).

### Background Art

With the gradual maturity of IP network technology, there arises a demand for transmitting circuit switching signaling protocol such as Signaling System Number 7. In order to meet the demand for transmitting signaling protocol in an IP network, IETF (Internet Engineering Task Force) network working team established a special signaling transmission group, and the IP network signaling transmission protocol (SIGTRAN protocol) formulated by them supports transmission of traditional circuit switching signaling through an IP network. In 2000, the IETF working team officially issued SCTP protocol (see RFC (Request For Comments) 4960 for the latest protocol), in this way, the service streams on both user plane and the control plane can be transmitted in a single IP network using SCTP. SCTP is a connection-oriented transport-layer protocol, which adopts traffic control and congestion control algorithms similar to TCP and ensures reliable transmission of the user data between two SCTP end points through own confirmation and retransmission mechanism. Compared with other transmission protocols such as TCP, SCTP has a shorter transmission delay, can prevent certain huge data from blocking other data, and has higher reliability and safety.

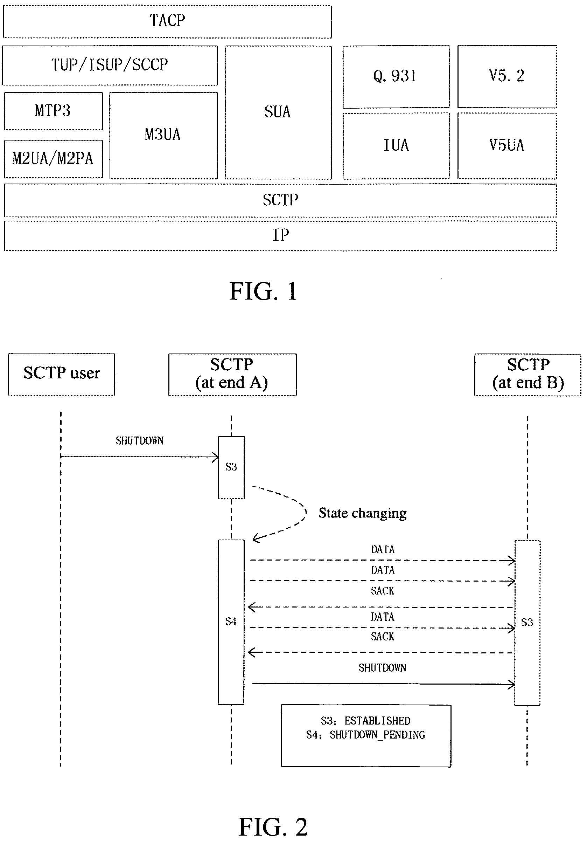

As can be seen by referring to FIG. 1, SCTP is originally designed for use in transmitting signaling system number 7 (SS7) on IP, incorporating some reliability properties of a SS7 signaling network into IP. The bottom-layer protocol stacks are all SCTP/IP for providing services such as check and retransmission for the higher-layer signaling and reducing the impact of the bottom-layer IP network on the higher-layer signaling as much as possible. In FIG. 1, M2PA (where M2PA is a MTP2 (Message Transfer Pan Level 2) equivalent adaptation layer), M2UA (where M2UA is a MTP2 (Message Transfer Part Level 2) user adaptation layer), M3UA (where M3UA is a MTP3 (Message Transfer Part Level 3) user adaptation layer), SUA (where SUA is a SCCP (Signaling Connection Control Part) user adaptation layer), IUA (where IUA is an ISDN (Integrated Services Digital Network) user adaptation layer), and V5UA (whereV5UA is a V5.2 user adaptation layer) are all upper-layer users served by SCTP, which are precisely the upper-layer users served by SCTP to be described in the present invention. This figure only shows the position of SCTP in the SIGTRAN protocol stack.

FIG. 2 is a flow chart of SHUTDOWN (shutdown message) (wherein, SHUTDOWN is a primitive of closing an association in SCTP, and upper-layer users served by SCTP use this primitive to gracefully close an association). The SCTP user in this figure represents an upper-layer user served by SCTP at end A. When SCTP at end A receives a SHUTDOWN request sent from a served upper-layer user, it immediately changes the association state of SCTP to SHUTDOWN-PENDING state (where SHUTDOWN-PENDING state is a state during the process of gracefully closing the SCTP, and when SCTP receives a SHUTDOWN message sent from the upper-layer user served by SCTP, SCTP firstly changes the association state to this state, and this state will not change until all the data at the local end have been completely transmitted to the opposite end), then checks whether there are still data in the sending buffer of the local end, sends the data if there are. These data will be retransmitted if no response is received from the end B in due time until all data are successfully transmitted to the opposite end (end B in the figure) (responses are received for all the transmitted data), at which time a SHUTDOWN message is sent to end B and the state is changed to SHUTDOWN-SENT state (where SHUTDOWN-SENT is a state during the process of gracefully closing SCTP, and the state is changed to said state after SCTP sends a SHUTDOWN message to the opposite end SCTP, waiting for the opposite end SCTP to make a response to this primitive).

As can be seen by referring to FIG. 2 and protocol specification RFC4960, if the local end SCTP receives a SHUTDOWN primitive sent from the upper-layer user for requesting shutdown of an association, the local end SCTP enters a SHUTDOWN-PENDING state. According to the provisions of the current protocol, when there are data in a sending buffer, all of these data need to be successfully transmitted to the opposite end, and the local end SCTP will maintain this SHUTDOWN-PENDING state forever as long as there are data that are not successfully sent, therefore, the association of the local end SCTP can never be used once a case where data are not transmitted successfully for a long time (e.g., when the receiving window of the opposite end is too small) occurs.

WO 2006/069 605 discloses a background art method of controlling an SCTP instance.

### Summary of the Invention

The technical problem to be solved in the present invention is to provide a method for state changing of stream control transmission protocol, whereby when the local end SCTP receives a SHUTDOWN request from the upper layer user to close an association, if there is data to be sent to the opposite end SCTP and the data cannot be sent successfully for a long time because the receiving buffer of the opposite end SCTP is small or because of other reasons, the association can be used again quickly.

In order to solve the above technical problem, the present invention provides a method for state changing of stream control transmission protocol, comprising:
if a local end stream control transmission protocol (SCTP) determining that there are unsent data in a sending buffer and a receiving window of an opposite end SCTP is larger than or equal to the length of a first unsent data currently after an association of the local end SCTP enters into a SHUTDOWN-PENDING state, then the local end SCTP sending the first unsent data to the opposite end SCTP, and closing the SCTP association if no response is received from the opposite end SCTP.

Furthermore, said no response being received from the opposite end SCTP means that no response is received from the opposite end SCTP in a time limit set by a system.

Furthermore, said no response being received from the opposite end SCTP specifically means that:
the local end SCTP sets a maximum number of times for data retransmission, and retransmits the first unsent data to the opposite end SCTP if no response is received from the opposite end SCTP in a time limit set by the system after the first unsent data is transmitted to the opposite end SCTP; and
the local end SCTP determines that no response is received from the opposite end SCTP when the number of times for data retransmission is equal to the maximum number of times for data retransmission and no response is received from the opposite end SCTP in the time limit set by the system.

Furthermore, when closing the association, the local end SCTP also reports association break to an upper-layer user and sends an ABORT message to the opposite end SCTP, and meanwhile transmits the state of the local end SCTP to a closed state.

Furthermore, when the local end SCTP determines that there is unsent data in a sending buffer and the receiving window of the opposite end SCTP is smaller than the length of the first unsent data currently, the method further comprises the following steps of:
the local end SCTP sending a probing message to the opposite end SCTP, the probing message being the first data marked as unsent in the sending buffer; starting a probing message transmission waiting timer Tw, if the local end SCTP receives a response message from the opposite end SCTP before the probing message transmission waiting timer Tw times out, the local end SCTP determining a Transmission Sequence Number (TSN) and a receiving window in Selective Acknowledgement (SACK) in the response message; and determining the TSN received from the opposite SCTP is equal to or larger than the TSN of the first data marked as unsent in the sending buffer and the receiving window in the response message is larger than or equal to the length of the first data marked as unsent in the sending buffer, then deleting data whose TSN is equal to the TSN in the SACK and all data before said data in the sending buffer, and setting all remaining data in the sending buffer as unsent.

Furthermore, if the local end SCTP does not receive the response message from the opposite end SCTP yet after the probing message transmission waiting timer Tw times out, the local end SCTP shuts down the association, reports association break to the upper-layer user, and sends an ABORT message to the opposite end SCTP, meanwhile transmits the state of the local end SCTP to a closed state.

Furthermore, if the local end SCTP does not receive the response message from the opposite end SCTP yet after the probing message transmission waiting timer Tw times out, the local end SCTP judges whether the times for transmitting the probing message is less than a maximum number of times for probing message transmission, if yes, the local end SCTP retransmits the probing message and adds 1 to the times for transmitting the probing message; otherwise, the local end SCTP close the association, reports association break to the upper-layer user, and sends an ABORT message to the opposite end SCTP, meanwhile transmits the state of the local end SCTP to a closed state.

Furthermore, if the local end SCTP determines that there is no unsent data in the sending buffer, then the local end SCTP checks whether there are data marked as sent, if not, the local end SCTP sends a SHUTDOWN message to the opposite end SCTP, meanwhile, transmits the state of the local end SCTP to SHUTDOWN-SENT; if there are data marked as sent, then the local end SCTP judges whether a response is received from the opposite end SCTP in the time limit set by the system.

Furthermore, after the local end SCTP sends the first unsent data to the opposite end SCTP, the local end SCTP marks the data as sent, adjusts the receiving window of the opposite end SCTP as being subtracted by the length of the data transmitted this time, and if a response is received from the opposite end SCTP in the time limit set by the system, the local end SCTP deletes the data for which a response has been received from the opposite end SCTP from the sending buffer;
after all data in the sending buffer of the local end SCTP have been successfully sent and a response has been received from the opposite end SCTP, the local end SCTP sends a SHUTDOWN message to the opposite end SCTP, and transmits the state of the local end SCTP to a SHUTDOWN-SENT state.

Furthermore, said receiving window refers to a size of remaining space in a receiving buffer of the opposite end SCTP, which is carried in response data of the opposite end SCTP; said probing message refers to a message transmitted from the local end SCTP to the opposite end SCTP for detecting data received by the opposite end SCTP and the length of the receiving window.

Compared with the prior art, with the present invention, when the local end SCTP receives a SHUTDOWN request from the upper layer user to close an association, if there is data to be sent to the opposite end SCTP and the data cannot be sent successfully for a long time because the receiving buffer of the opposite end SCTP is small or because of other reasons, the association can be used again quickly.

### Brief Description of the Drawings

FIG. 1 is a structural illustration for the position of the local end SCTP in SIGTRAN protocol stack;
FIG. 2 illustrates the state when the local end SCTP shuts down an association upon receiving a SHUTDOWN message from an upper-layer user; and
FIG. 3 is a flow chart of the method for state changing of stream control transmission protocol according to the present invention.

### Preferred Embodiments of the Invention

With the method of the present invention, after the local end SCTP enters SHUTDOWN-PENDING state, if there are data to be sent in the sending buffer, then the data are sent sequentially, and these data are retransmitted if no response is received from the opposite end in a specified time limit. The association is terminated when the times for retransmission exceeds the maximum number of times for data retransmission so as to ensure that the local end SCTP can enter serving state as soon as possible, thereby efficiently solving the problem of long-time unavailability of the association.

In FIG. 1, MTP2 (Message Transfer Part Level 2) user peer-to-peer adaptation layer M2PA, MTP2 (Message Transfer Part Level 2) user adaptation layer M2UA, MTP3 (Message Transfer Part Level 3) user adaptation layer M3UA, SCCP (Signaling Connection Control Part) user adaptation layer SUA, ISDN (Integrated Services Digital Network) user adaptation layer IUA, and V5.2 user adaptation layer V5UA are all upper-layer users served by SCTP.

The present invention will be further described with reference to the drawings and the specific embodiments.

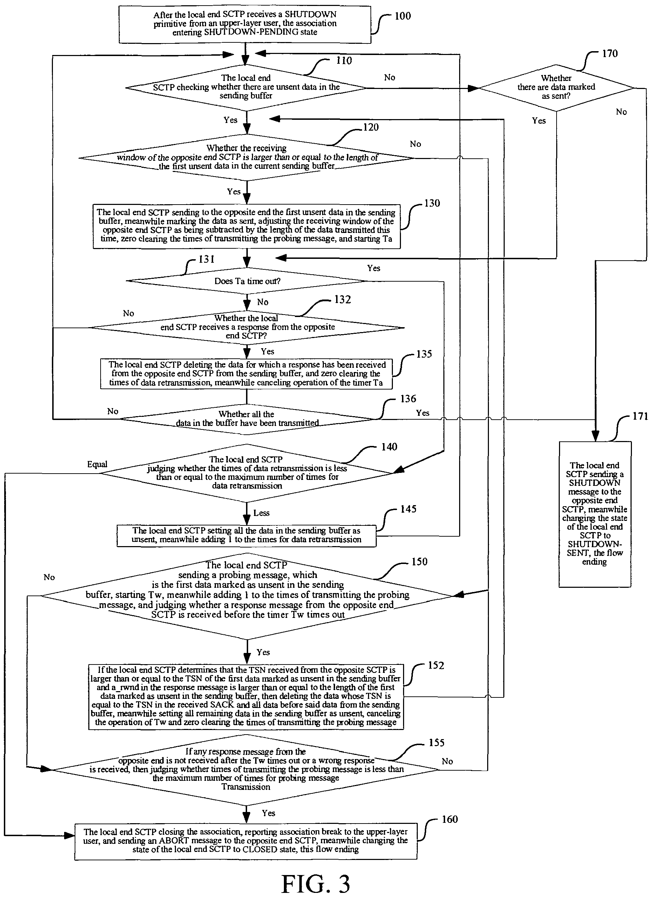

As shown in FIG. 3, the method for state changing of stream control transmission protocol of the present invention comprises the following steps:
Step 100, after the local end SCTP receives a SHUTDOWN primitive from an upper-layer user, the association entering SHUTDOWN-PENDING state;
Step 110, the local end SCTP checking whether there are unsent data in the sending buffer, if yes, executing step 120; otherwise, executing step 170;
Step 120, the local end SCTP judging whether the receiving window of the opposite end SCTP is larger than or equal to the length of the first unsent data in the current sending buffer, if yes, executing step 130; otherwise, executing step 150;
   where the receiving window refers to the size of the remaining space in the receiving buffer of the opposite end SCTP, which is carried by a data response.
Step 130, the local end SCTP sending to the opposite end the first unsent data in the sending buffer, meanwhile marking the data as sent, adjusting the receiving window of the opposite end SCTP as being subtracted by the length of the data transmitted this time, zero clearing the times of transmitting the probing message, and starting a response waiting timer Ta;

The response waiting timer Ta is used to determine whether a response is received in time for the data sent to the opposite end SCTP in a specified time limit, the timer Ta is started after the data is sent and is cancelled after a response is received, the duration time can be configured and be dynamically adjusted in a range from 500ms-2000ms.

The means of a timer is used in this example to judge that no response is received from the opposite end SCTP in a time limit set by the system, and a counter or other means can also be used in other examples. The present invention is not limited thereto.
Step 131, if the timer Ta does not time out, then executing step 132; otherwise, executing step 140;
Step 132, if the local end SCTP receives a response from the opposite end SCTP, then executing step 135; other executing step 110;
Step 135, the local end SCTP deleting the data for which a response has been received from the opposite end SCTP from the sending buffer, and zero clearing the times of data retransmission, meanwhile canceling operation of the timer Ta, and executing step 136;
Step 136, the local end SCTP judging whether all the data in the buffer have been transmitted, if yes, skipping to step 171; otherwise returning to step 110, proceeding with transmission of data;
Step 140, the local end SCTP judging whether the times of data retransmission is less than or equal to the maximum number of times for data retransmission (where the maximum number of times for data retransmission can be Max.Data.Retran), executing step 145 if it is less than the maximum number of times for data retransmission; executing step 160 if it is equal to the maximum number of times for data retransmission;

The maximum number of times for data retransmission means that the data is retransmitted after the response waiting timer Ta times out, and if the times for transmission exceed the maximum number of times for data retransmission, the association needs to be closed. The maximum number of times for data retransmission can be configured and be dynamically adjusted, e.g., it can be 5.
Step 145, the local end SCTP setting all the data in the sending buffer as unsent, meanwhile adding 1 to the times for data retransmission, executing step 110;
Step 150, the local end SCTP sending a probing message, which is the first data marked as unsent in the sending buffer or a blank message, starting a probing message transmission waiting timer Tw, meanwhile adding 1 to the times of transmitting the probing message, canceling Ta if it is operated, executing step 152 if the local end SCTP receives a response message from the opposite end SCTP before the timer Tw times out; otherwise, executing step 155;

The probing message refers to a message transmitted from the local end SCTP to the opposite end SCTP for detecting data received by the opposite end SCTP and the length of the receiving window.

After the opposite end SCTP receives this probing message, it will return SACK (Selective Acknowledgement), which carries TSN and the length of the receiving window of the opposite end SCTP.

The probing message transmission waiting timer Tw is intended to be started when the receiving window of the opposite end SCTP becomes too small to send data and it is cancelled when data can be sent; the duration time of the Tw can be configured and be dynamically adjusted in a range from 100ms-500ms.
Step 152, if the local end SCTP determines according to a Transmission Sequence Number (TSN) and a_rwnd in SACK that the TSN received from the opposite SCTP is larger than or equal to the TSN of the first data marked as unsent in the sending buffer and the receiving window in the response message (a_rwnd) is larger than or equal to the length of the first data marked as unsent in the sending buffer, then deleting the data whose TSN is equal to the TSN in the received SACK and all data before said data from the sending buffer, meanwhile setting all remaining data in the sending buffer as unsent, canceling the operation of Tw and zero clearing the times of transmitting the probing message, executing step 120;
Step 155, if the local end SCTP does not receive any response message from the opposite end after the Tw times out or a wrong response is received, then the local end SCTP judging whether times of transmitting the probing message is less than the maximum number of times for probing message transmission (where the maximum number of times for probing message transmission can be Max.Probe.Retran), if yes, executing step 150, otherwise executing step 160;

The maximum number of times for probing message transmission means when the times of transmitting a probing message is equal to the maximum number of times for probing message transmission, it suggests that the opposite end SCTP has a fault and thus is unable to receive data, and the association needs to be closed. The maximum number of times for probing message transmission can be configured and dynamically adjusted, e.g., it can be 5.
Step 160, the local end SCTP closing the association, reporting association break to the upper-layer user, and sending an ABORT message to the opposite end SCTP, meanwhile changing the state of the local end SCTP to CLOSED state, this flow ending;
Step 170, the local end SCTP checking whether there are data marked as sent, if not, executing step 171; if yes, executing step 131;
Step 171, the local end SCTP sending a SHUTDOWN message to the opposite end SCTP, meanwhile changing the state of the local end SCTP to SHUTDOWN-SENT, this flow ending.

The present method can ensure as much as possible that the data can be transmitted to the opposite end SCTP safely when association is closed by SHUTDOWN, and if it is desired to use the SCTP association again quickly, the present method can be evolved like this: not zero clearing the times of data retransmission and the times of probing message transmission, or the times of data retransmission and the times of probing message transmission being accumulated times; or not retransmitting the times of data retransmission and the times of probing message transmission, the local end SCTP closing the SCTP association as long as the local end does not receive any response from the opposite end SCTP when the response waiting timer Ta and/or the probing message transmission waiting timer Tw time out, where this can be adjusted according to the practical environment.

The present invention will be further described with reference to the specific examples.

In the method for state changing of stream control transmission protocol, the flow of the method for data processing is as follows:
Step 1: the local end SCTP closing the association upon receiving SHUTDOWN sent from an upper-layer user served by SCTP;
Step 2: the local end SCTP firstly changing the state to SHUTDOWN-PENDING;
Step 3: the local end SCTP judging whether there are data to be sent in its sending buffer;
Step 4: if there is no data in step 3, and there is no data marked as sent, the local end SCTP sending a SHUTDOWN primitive to the opposite end SCTP, meanwhile changing its state to SHUTDOWN-SENT; if there are data marked as sent, then waiting for Ta to time out, judging whether the times for data retransmission DataRetranNum is larger than or equal to the maximum number of times for data retransmission Max.Data.Retran after Ta times out; the local end SCTP sending ABORT to the opposite end SCTP if it is larger than or equal to Max.Data.Retran, sending SHUTDOWN ACK to the upper-layer user and closing the association, if it is less than Max.Data.Retran, then executing step 3;
Step 5: if there are data in the sending buffer in step 3, assuming that there are data D1 (TSN=1, length=100), D2 (TSN=2, length=200), D3 (TSN=3, length=300) to be sent, and further judging whether the receiving window of the opposite end SCTP is larger than the length 100 of the data to be sent this time;
Step 6: if the receiving window of the opposite end SCTP is larger than or equal to the length of the data to be sent this time in step 5, then assuming that the data to be sent this time is D1, sending the data D1, and marking D1 as sent, starting the timer Ta (which is assumed as 1s), meanwhile proceeding with step 3;
Step 7: if the receiving window of the opposite end SCTP is less than the length of the data to be sent this time in step 5, assuming that D1 is the probing data to be sent this time, sending the data D1, starting the timer Tw (which is assumed as 200ms), and setting the times of transmitting the probing message as ProbeNum added with 1;
Step 8: if the timer Ta set in step 6 times out, judging whether a response is received from the opposite end SCTP within 1s;
Step 9: according to the result of step 8, if no response is received from the opposite end SCTP, judging whether DataRetranNum is larger than or equal to Max.Data.Retran;
Step 10: according to the result of step 9, if DataRetranNum is larger than or equal to Max.Data.Retran, the local end SCTP sending ABORT to the opposite end SCTP, sending SHUTDOWN ACK (SHUTDOWN ACK is a primitive for responding to the upper-layer user after the local end SCTP gracefully closes the association, and the local end SCTP uses this primitive to respond to the SHUTDOWN initiated by the upper-layer user served by SCTP) to the upper-layer user, and closing the association; if DataRetranNum is less than Max.Data.Retran, then adding 1 to DataRetranNum, and proceeding with step 3;
Step 11: according to the result of step 8, if SACK is received from the opposite end SCTP, assuming that TSN Ack=1, a_rwnd=300, and setting DataRetranNum=0, deleting D1 from the sending buffer and proceeding with step 3;
Step 12: according to the operation conditions of Tw in step 7, if a response SACK is received from the opposite end SCTP when the Tw times out, assuming TSN Ack=1, a_rwnd=300, setting ProbeNum=0, deleting D1 from the sending buffer and proceeding with step 3; if a response SACK is received from the opposite end SCTP, assuming TSN Ack=0, a_rwnd=50, or if no response is received from the opposite end SCTP after the Tw times out, judging whether ProbeNum is larger than or equal to Max.Probe.Retran;
Step 13: if ProbeNum is larger than or equal to Max.Probe.Retran in step 12, the local end SCTP sending ABORT to the opposite end SCTP, sending SHUTDOWN ACK to the upper-layer user and closing the association; if ProbeNum is less than Max.Probe.Retran, then proceeding with step 7.

The foregoing are only specific preferred embodiments of the present invention, but the protection scope of the present invention is not limited thereto, and all variations or replacements easily made within the technical scope disclosed by the present invention by a person having ordinary skill in the art should fall into the protection scope of the present invention. Therefore, the protection scope of the present invention should be defined by the attached claims.

### Industrial Applicability

With the present invention, when the local end SCTP receives a SHUTDOWN request from the upper layer user to close an association, if there is data to be sent to the opposite end SCTP and the data cannot be sent successfully for a long time because the receiving buffer of the opposite end SCTP is small or because of other reasons, the association can be used again quickly.

## Claims

1. A method for state changing of stream control transmission protocol, said method comprising the following steps of:
if a local end stream control transmission protocol (SCTP) determining that there are unsent data in a sending buffer and a receiving window of an opposite end SCTP is larger than or equal to the length of a first unsent data currently after an association of the local end SCTP enters into a SHUTDOWN-PENDING state, then the local end SCTP sending the first unsent data to the opposite end SCTP, and closing the SCTP association if no response is received from the opposite end SCTP;
the method further comprising the following steps when the local end SCTP determines that there is unsent data in a sending buffer and the receiving window of the opposite end SCTP is smaller than the length of the first unsent data currently:
the local end SCTP sending a probing message to the opposite end SCTP, the probing message being the first data marked as unsent in the sending buffer; starting a probing message transmission waiting timer Tw, if the local end SCTP receives a response message from the opposite end SCTP before the probing message transmission waiting timer Tw times out, the local end SCTP determining a Transmission Sequence Number (TSN) and a receiving window in Selective Acknowledgement (SACK) in the response message; and determining the TSN received from the opposite SCTP is larger than or equal to the TSN of the first data marked as unsent in the sending buffer and the receiving window in the response message is larger than or equal to the length of the first data marked as unsent in the sending buffer, then deleting data whose TSN is equal to the TSN in the SACK and all data before said data in the sending buffer, and setting all remaining data in the sending buffer as unsent;
wherein,
said receiving window refers to a size of remaining space in a receiving buffer of the opposite end SCTP, which is carried in response data of the opposite end SCTP;
said probing message refers to a message transmitted from the local end SCTP to the opposite end SCTP for detecting data received by the opposite end SCTP and the length of the receiving window.

2. The method of claim 1, wherein,
said no response being received from the opposite end SCTP means that no response is received from the opposite end SCTP in a time limit set by a system.

3. The method of claim 1, wherein,
said no response being received from the opposite end SCTP specifically means that,
the local end SCTP sets a maximum number of times for data retransmission, and retransmits the first unsent data to the opposite end SCTP if no response is received from the opposite end SCTP in a time limit set by the system after the first unsent data is transmitted to the opposite end SCTP; and
the local end SCTP determines that no response is received from the opposite end SCTP when the number of times for data retransmission is equal to the maximum number of times for data retransmission and no response is received from the opposite end SCTP in the time limit set by the system.

4. The method of claim 1 or 2, further comprising:
when closing the association, the local end SCTP also reporting association break to an upper-layer user and sending an ABORT message to the opposite end SCTP, and meanwhile transmitting the state of the local end SCTP to a closed state.

5. The method of claim 1, further comprising:
if the local end SCTP does not receive the response message from the opposite end SCTP yet after the probing message transmission waiting timer Tw times out, the local end SCTP closing the association, reporting association break to the upper-layer user, and sending an ABORT message to the opposite end SCTP, meanwhile transmitting the state of the local end SCTP to a closed state.

6. The method of claim 1, further comprising:
if the local end SCTP does not receive the response message from the opposite end SCTP yet after the probing message transmission waiting timer Tw times out, the local end SCTP judging whether the times for transmitting the probing message is less than a maximum number of times for probing message transmission, if yes, the local end SCTP retransmitting the probing message and adding 1 to the times for transmitting the probing message; otherwise, the local end SCTP closing the association, reporting association break to the upper-layer user, and sending an ABORT message to the opposite end SCTP, meanwhile transmitting the state of the local end SCTP to a closed state.

7. The method of claim 1 or 2, further comprising:
if the local end SCTP determines that there is no unsent data in the sending buffer, then the local end SCTP checking whether there are data marked as sent, if not, the local end SCTP sending a SHUTDOWN message to the opposite end SCTP, meanwhile, transmitting the state of the local end SCTP to SHUTDOWN-SENT; if there are data marked as sent, then the local end SCTP judging whether a response is received from the opposite end SCTP in the time limit set by the system.

8. The method of claim 1, 2 or 3, further comprising:
after the local end SCTP sends the first unsent data to the opposite end SCTP, the local end SCTP marking the data as sent, adjusting the receiving window of the opposite end SCTP as being subtracted by the length of the data transmitted this time, and if a response is received from the opposite end SCTP in the time limit set by the system, the local end SCTP deleting the data for which a response has been received from the opposite end SCTP from the sending buffer;
after all data in the sending buffer of the local end SCTP have been successfully sent and a response has been received from the opposite end SCTP, the local end SCTP sending a SHUTDOWN message to the opposite end SCTP, and transmitting the state of the local end SCTP to a SHUTDOWN-SENT state.

## Patentansprüche

1. Verfahren für die Zustandsänderung eines Stream Control Transmission Protocol, wobei das Verfahren die folgenden Schritte aufweist:
wenn ein Stream Control Transmission Protocol (SCTP) am lokalen Ende bestimmt, dass es nicht gesendete Daten in einem Sendepuffer gibt und ein Empfangsfenster eines SCTP am entgegengesetzten Ende gegenwärtig größer oder gleich der Länge von ersten nicht gesendeten Daten ist, nachdem eine Verbindung des SCTP am lokalen Ende in einen SHUTDOWN-PENDING-Zustand eintritt, dann sendet das SCTP am lokalen Ende die ersten nicht gesendeten Daten zu dem SCTP am entgegengesetzten Ende und schließt die SCTP-Verbindung, wenn keine Antwort von dem SCTP am entgegengesetzten Ende empfangen wird;
wobei das Verfahren ferner die folgenden Schritte aufweist, wenn das SCTP am lokalen Ende bestimmt, dass es nicht gesendete Daten in einem Sendepuffer gibt und das Empfangsfenster des SCTP am entgegengesetzten Ende gegenwärtig kleiner ist als die Länge der ersten nicht gesendeten Daten:
Senden einer Sondierungsnachricht durch das SCTP am lokalen Ende zu dem SCTP am entgegengesetzten Ende, wobei die Sondierungsnachricht die ersten Daten ist, die als nicht gesendet in dem Sendepuffer gekennzeichnet sind; Starten eines Sondierungsnachrichtübertragungs-Wartetimers Tw, wenn das SCTP am lokalen Ende eine Antwortnachricht von dem SCTP am entgegengesetzten Ende empfängt, bevor der Sondierungsnachrichtübertragungs-Wartetimer Tw abgelaufen ist, wobei das SCTP am lokalen Ende eine Übertragungsreihenfolgennummer (TSN) und ein Empfangsfenster in Selective Acknowledgement (SACK) in der Antwortnachricht bestimmt; und Bestimmen, dass die von dem entgegengesetzten SCTP empfangene TSN größer oder gleich der TSN der ersten Daten ist, die als nicht gesendet in dem Sendepuffer gekennzeichnet sind, und das Empfangsfenster in der Antwortnachricht größer oder gleich der Länge der ersten Daten ist, die als nicht gesendet in dem Sendepuffer gekennzeichnet sind, und dann das Löschen von Daten, deren TSN gleich der TSN in dem SACK ist, und von allen Daten vor den Daten in dem Sendepuffer und das Festlegen aller verbleibenden Daten in dem Sendepuffer als nicht gesendet;
wobei
das Empfangsfenster auf eine Größe des verbleibenden Raums in einem Empfangspuffer des SCTP am entgegengesetzten Ende verweist, der in Antwortdaten des SCTP am entgegengesetzten Ende transportiert wird;
wobei die Sondierungsnachricht auf eine Nachricht verweist, die von dem SCTP am lokalen Ende zu dem SCTP am entgegengesetzten Ende übertragen wird, um Daten, die von dem SCTP am entgegengesetzten Ende empfangen werden, und die Länge des Empfangsfensters zu detektieren.

2. Verfahren nach Anspruch 1, wobei
die Nichtantwort, die von dem SCTP am entgegengesetzten Ende empfangen wird, bedeutet, dass keine Antwort von dem SCTP am entgegengesetzten Ende in einer von einem System gesetzten Zeitbegrenzung empfangen wird.

3. Verfahren nach Anspruch 1, wobei
die Nichtantwort, die von dem SCTP am entgegengesetzten Ende empfangen wird, speziell bedeutet, dass
das SCTP am lokalen Ende eine maximale Anzahl von Malen für die Datenneuübertragung festlegt und die ersten nicht gesendeten Daten zu dem SCTP am entgegengesetzten Ende neu überträgt, wenn keine Antwort von dem SCTP am entgegengesetzten Ende in einer von dem System gesetzten Zeitbegrenzung empfangen wird, nachdem die ersten nicht gesendeten Daten zu dem SCTP am entgegengesetzten Ende übertragen wurden; und
das SCTP am lokalen Ende bestimmt, dass keine Antwort von dem SCTP am entgegengesetzten Ende empfangen wurde, wenn die Anzahl der Male für die Datenneuübertragung gleich der maximalen Anzahl von Malen für eine Datenneuübertragung ist und keine Antwort von dem SCTP am entgegengesetzten Ende in der von dem System gesetzten Zeitbegrenzung empfangen wurde.

4. Verfahren nach Anspruch 1 oder 2, ferner aufweisend:
dass, wenn die Verbindung geschlossen wird, das SCTP am lokalen Ende auch den Verbindungsabbruch an einen Benutzer einer höheren Schicht berichtet und eine ABBRUCH-Nachricht zu dem SCTP am entgegengesetzten Ende sendet und währenddessen den Zustand des SCTP am lokalen Ende zu einem geschlossenen Zustand überträgt.

5. Verfahren nach Anspruch 1, ferner aufweisend:
wenn das SCTP am lokalen Ende die Antwortnachricht von dem SCTP am entgegengesetzten Ende auch nachdem der Sondierungsnachrichtübertragungs-Wartetimer Tw abgelaufen ist, nicht empfängt, dass das SCTP am lokalen Ende die Verbindung schließt, den Verbindungsabbruch an den Benutzer der höheren Schicht berichtet und eine ABBRUCH-Nachricht zu dem SCTP am entgegengesetzten Ende sendet und währenddessen den Zustand des SCTP am lokalen Ende zu einem geschlossenen Zustand überträgt.

6. Verfahren nach Anspruch 1, ferner aufweisend:
wenn das SCTP am lokalen Ende die Antwortnachricht von dem SCTP am entgegengesetzten Ende auch nachdem der Sondierungsnachrichtübertragungs-Wartetimer Tw abgelaufen ist, nicht empfängt, dass das SCTP am lokalen Ende beurteilt, ob die Male zum Übertragen der Sondierungsnachricht kleiner als eine maximale Anzahl von Malen für eine Sondierungsnachrichtenübertragung sind, und wenn ja, das SCTP am lokalen Ende die Sondierungsnachricht erneut sendet und eine 1 zu den Malen zum Übertragen der Sondierungsnachricht hinzufügt; und dass andernfalls das SCTP am lokalen Ende die Verbindung schließt, den Verbindungsabbruch dem Benutzer der höheren Schicht berichtet und eine ABBRUCH-Nachricht zu dem SCTP am entgegengesetzten Ende sendet und währenddessen den Zustand des SCTP am lokalen Ende zu einem geschlossenen Zustand überträgt.

7. Verfahren nach Anspruch 1 oder 2, ferner aufweisend:
wenn das SCTP am lokalen Ende bestimmt, dass es keine nicht gesendeten Daten im Sendepuffer gibt, dass das SCTP am lokalen Ende dann überprüft, ob es Daten gibt, die als gesendet gekennzeichnet sind, und wenn nicht, das SCTP am lokalen Ende eine SHUTDOWN-Nachricht zu dem SCTP am entgegengesetzten Ende sendet und währenddessen den Zustand des SCTP am lokalen Ende zu SHUTDOWN-SENT überträgt; wenn es als gesendet gekennzeichnete Daten gibt, dass das SCTP am lokalen Ende dann beurteilt, ob eine Antwort von dem SCTP am entgegengesetzten Ende in der von dem System gesetzten Zeitbegrenzung empfangen wurde.

8. Verfahren nach Anspruch 1, 2 oder 3, ferner aufweisend:
nachdem das SCTP am lokalen Ende die ersten nicht gesendeten Daten zu dem SCTP am entgegengesetzten Ende gesendet hat, dass das SCTP am lokalen Ende die Daten als gesendet kennzeichnet, das Empfangsfenster des SCTP am entgegengesetzten Ende als subtrahiert von der Länge der Daten, die dieses Mal übertragen wurden, anpasst, und, wenn eine Antwort von dem SCTP am entgegengesetzten Ende in der Zeitbegrenzung empfangen wird, die von dem System festgelegt ist, das SCTP am lokalen Ende die Daten, für die eine Antwort von dem SCTP am entgegengesetzten Ende von dem Sendepuffer empfangen wurde, löscht;
nachdem alle Daten in dem Sendepuffer des SCTP am lokalen Ende erfolgreich gesendet wurden und eine Antwort von dem SCTP am entgegengesetzten Ende empfangen wurde, dass das SCTP am lokalen Ende eine SHUTDOWN-Nachricht zu dem SCTP am entgegengesetzten Ende sendet und den Zustand des SCTP am lokalen Ende zu einem SHUTDOWN-SENT-Zustand überträgt.

## Revendications

1. Procédé de changement d'état d'un protocole de transmission des commandes de flux, ledit procédé comprenant les étapes suivantes selon lesquelles :
si un protocole de transmission de commande de flux (SCTP) d'extrémité locale détermine qu'actuellement il y a des données non envoyées dans un tampon d'envoi et qu'une fenêtre de réception d'un SCTP d'extrémité opposée est de taille supérieure ou égale à la longueur de premières données non envoyées, après qu'une association du SCTP d'extrémité locale est passée dans un état ARRET-EN COURS, alors le SCTP d'extrémité locale envoie les premières données non envoyées au SCTP d'extrémité opposée, et clôture l'association du SCTP si aucune réponse n'est reçue du SCTP d'extrémité opposée ;
le procédé comprenant en outre les étapes selon lesquelles, lorsque le SCTP d'extrémité locale détermine qu'actuellement il y a des données non envoyées dans un tampon d'envoi et que la fenêtre de réception du SCTP d'extrémité opposée est de taille inférieure à la longueur des premières données non envoyées :
le SCTP d'extrémité locale envoie un message de sonde au SCTP d'extrémité opposée, le message de sonde étant constitué des premières données marquées comme étant non envoyées dans le tampon d'envoi ; démarre un minuteur d'attente de transmission de message de sonde Tw, si le SCTP d'extrémité locale reçoit un message de réponse du SCTP d'extrémité opposée avant l'expiration du minuteur d'attente de transmission de message de sonde Tw, le SCTP d'extrémité locale détermine un Numéro de Séquence de Transmission (TSN) et une fenêtre de réception dans un Accusé Réception Sélectif (SACK) dans le message de réponse ; et détermine que le TSN reçu du SCTP opposé est supérieur ou égal au TSN des premières données marquées comme étant non envoyées dans le tampon d'envoi et que la fenêtre de réception dans le message de réponse est de taille supérieure ou égale à la longueur des premières données marquées comme étant non envoyées dans le tampon d'envoi, puis efface les données dont les TSN est égal au TSN dans le SACK et toutes les données avant lesdites données dans le tampon d'envoi, et règle toutes les données restant dans le tampon d'envoi comme état non envoyées ;
dans lequel
ladite fenêtre de réception fait référence à une taille de l'espace restant dans un tampon de réception du SCTP d'extrémité opposée, qui est transportée dans des données de réponse du SCTP d'extrémité opposée ;
ledit message de sonde fait référence à un message transmis par le SCTP d'extrémité locale au SCTP d'extrémité opposée pour la détection de données reçues par le SCTP d'extrémité opposée et de la longueur de la fenêtre de réception.

2. Procédé selon la revendication 1, dans lequel :
ladite aucune réponse reçue du SCTP d'extrémité opposée signifie qu'aucune réponse n'est reçue du SCTP d'extrémité opposée dans une limite temporelle définie par un système.

3. Procédé selon la revendication 1, dans lequel :
ladite aucune réponse reçue du SCTP d'extrémité opposée signifie spécifiquement que
le SCTP d'extrémité locale définit un nombre maximal de retransmissions de données, et retransmet les premières données non envoyées au SCTP d'extrémité opposée si aucune réponse n'est reçue du SCTP d'extrémité opposée dans une limite temporelle définie par le système après que les premières données non envoyées ont été transmises au SCTP d'extrémité opposée ; et
le SCTP d'extrémité locale détermine qu'aucune réponse n'est reçue du SCTP d'extrémité opposée lorsque le nombre de retransmissions de données est égal au nombre maximal de retransmissions de données et qu'aucune réponse n'est reçue du SCTP d'extrémité opposée dans la limite temporelle définie par le système.

4. Procédé selon la revendication 1 ou 2, comprenant en outre le fait que :
lors de la clôture de l'association, le SCTP d'extrémité locale rapporte également une rupture d'association à un utilisateur de couche supérieure et envoie un message ABANDON au SCTP d'extrémité opposée, et entre-temps fait passer l'état du SCTP d'extrémité locale à un état fermé.

5. Procédé selon la revendication 1, comprenant en outre :
si le SCTP d'extrémité locale n'a pas encore reçu le message de réponse du SCTP d'extrémité opposée après que le minuteur d'attente de transmission de message de sonde Tw a expiré, le SCTP d'extrémité locale clôture l'association, rapporte une rupture d'association à l'utilisateur de couche supérieure, et envoie un message ABANDON au SCTP d'extrémité opposée et entre-temps fait passer l'état du SCTP d'extrémité locale à un état fermé.

6. Procédé selon la revendication 1, comprenant en outre :
si le SCTP d'extrémité locale n'a pas encore reçu le message de réponse du SCTP d'extrémité opposée après l'expiration du minuteur d'attente de transmission de message de sonde Tw, le SCTP d'extrémité locale estime si le nombre de transmissions du message de sonde est inférieur à un nombre maximal de transmissions du message de sonde, si oui, le SCTP d'extrémité locale retransmet le message de sonde et ajoute 1 au nombre de transmissions du message de sonde ; autrement, le SCTP d'extrémité locale clôture l'association, rapporte une rupture d'association à l'utilisateur de couche supérieure, et envoie un message ABANDON au SCTP d'extrémité opposée, et entre-temps fait passer l'état du SCTP d'extrémité locale à un état fermé.

7. Procédé selon la revendication 1 ou 2, comprenant en outre le fait que :
si le SCTP d'extrémité locale détermine qu'il y a pas de données non envoyées dans le tampon d'envoi, alors le SCTP d'extrémité locale vérifie s'il y a des données marquées comme étant envoyées, si tel n'est pas le cas, le SCTP d'extrémité locale envoie un message ARRET au SCTP d'extrémité opposée, entre-temps fait passer l'état du SCTP d'extrémité locale à ARRET-ENVOYÉ ; s'il y a des données marquées comme étant envoyées, alors le SCTP d'extrémité locale estime si une réponse est reçue du SCTP d'extrémité opposée dans la limite temporelle définie par le système.

8. Procédé selon la revendication 1, 2 ou 3, comprenant en outre le fait que :
après que le SCTP d'extrémité locale a envoyé les premières données non envoyées au SCTP d'extrémité opposée, le SCTP d'extrémité locale marque les données comme étant envoyées, ajuste la fenêtre de réception du SCTP d'extrémité opposée comme étant soustraite de la longueur des données transmises cette fois, et si une réponse est reçue du SCTP d'extrémité opposée dans la limite temporelle définie par le système, le SCTP d'extrémité locale efface du tampon d'envoi les données pour lesquelles une réponse a été reçue du SCTP d'extrémité opposée ;
après que toutes les données du tampon d'envoi du SCTP d'extrémité locale ont été envoyées avec succès et qu'une réponse a été reçue du SCTP d'extrémité opposée, le SCTP d'extrémité locale envoie un message ARRET au SCTP d'extrémité opposée, et fait passer l'état du SCTP d'extrémité locale à un état ARRET-ENVOYÉ.
